# EUROPÄISCHE PATENTSCHRIFT

(11) **EP 1 455 989 B1**
(45) Veröffentlichungstag und Bekanntmachung des Hinweises auf die Patenterteilung: **14.02.2007**
(21) Anmeldenummer: 02787937.8
(22) Anmeldetag: 11.12.2002
(51) Int. Cl.: B25D 17/26

(54) **BOHR- UND/ODER SCHLAGHAMMER MIT EINER SCHMIERVORRICHTUNG**
DRILLING AND/OR STRIKING HAMMER WITH A LUBRICATING DEVICE
MARTEAU PERFORATEUR ET/OU PERCUTEUR POURVU D'UN DISPOSITIF DE LUBRIFICATION

(30) Priorität: 21.12.2001 DE 10163278
(43) Veröffentlichungstag der Anmeldung: 15.09.2004
(73) Patentinhaber: Wacker Construction Equipment AG, 80809 München (DE)
(72) Erfinder: BERGER, Rudolf, 82031 Grünwald (DE); SCHMID, Wolfgang, 70794 Filderstadt (DE)
(74) Vertreter: Hoffmann, Jörg Peter
(86) Internationale Anmeldenummer: PCT/EP2002/014065
(87) Internationale Veröffentlichungsnummer: WO 2003/053639

(56) Entgegenhaltungen:
- EP-A- 0 297 064
- DE-A- 2 222 062
- DE-A- 2 654 616
- DE-A- 2 804 665
- DE-A- 19 805 187
- DE-B- 1 208 234
- GB-A- 2 210 473
- JP-A- 57 066 881
- US-A- 3 822 001
- US-A- 5 060 761

## Beschreibung

Die Erfindung betrifft gemäß dem Oberbegriff von Patentanspruch 1 einen Bohr- und/oder Schlaghammer mit einem Schlagwerk und einer Schmiervorrichtung zum Schmieren des Schlagwerks.

Ein derartiger Bohr- und/oder Schlaghammer ist aus der DE-B-1 208 234 bekannt.

Ein weiterer Bohr- und/oder Schlaghammer, nachfolgend als Hammer bezeichnet, ist aus der DE 39 36 849 A1 bekannt. Dort ist in einem Deckel eine Wölbung ausgebildet, in der ein hochviskoses Fett aufgenommen ist, das über eine Dosieröffnung allmählich in eine Gleitlagerung zwischen einem Kurbelbolzen und einer Pleuelstange gelangen kann. Das Ausbringen des Schmiermittels erfolgt nach dem Zufallsprinzip und ist nur bei entsprechender Lage des Hammers möglich, da eine Schwerkraftunterstützung erforderlich ist:

In der EP 0 861 997 B1 ist eine Handwerkzeugmgschine mit geschmiertem Winkelgetriebe beschrieben. Dort ist ein Schmierstoffdepot in Form eines nach oben offenen Topfes vorgesehen, der durch eine sich drehende Spindelwelle durchdrungen ist. In dem Topf ist eine Metallkugel derart beweglich, dass sie aufgrund der Gehäusevibrationen das ebenfalls in dem Topf befindliche Schmiermittel durchwalkt. Im Boden des Topfs ist eine Dosieröffnung vorgesehen, durch die durch die Zufallsbewegung der Metallkugel gelegentlich Schmiermittel nach unten gedrückt wird und auf diese Weise zur Schmierung in ein Kegelgetriebe gelangt. Auch hier unterliegt die Schmierung dem Zufallsprinzip und kann nicht lageunabhängig erfolgen.

Aus der US-A-5,060,761 ist eine Schmiervorrichtung für den Meißel eines Hydraulikhammers bekannt. Das Schlagwerk des Hammers wird durch ein eigenes Hydrauliksystem angetrieben, das auch zum Antrieb und zur Ansteuerung der Fett-Schmiereinrichtung des Meißels dient.

In der DE-B-1208234 wird eine durch das Luftkissen eines Luftfederschlagwerkes gesteuerte Öl-Schmiereinrichtung beschrieben. Die in dem Luftkissen auftretenden hohen Druckspitzen werden über einen Kanal zu einem Ölvorrat geführt und können so Öl über eine Öldüse austreiben. Je höher die Druckspitzen in dem Luftkissen sind, desto stärker ist die Schmierwirkung.

Aus der JP-A-57066881 ist eine Schmiereinrichtung für einen Hammer bekannt, die bei jeder Betätigung des Geräteschalters aktiviert wird. Je häufiger das Gerät eingeschaltet wird, desto stärker wird das Schlagwerk geschmiert. Bei Dauerbetrieb des Hammers und somit unveränderter Stellung des Geräteschalters findet keine Schmiermittelzufuhr statt.

In der US-A-3,822,001 wird eine Schmiervorrichtung für einen Hammer beschrieben, bei der ein mit dem Kurbeltrieb rotierender Filzabstreifer Fett an einem Fettreservoir entnimmt. Dazu streicht der Filzabstreifer an einer Kugel entlang, die an ihrer Rückseite wiederum in das Fettreservoir eintaucht. Wenn die Kugel nicht mehr im Kontakt mit dem Fettvorrat steht, wird die Schmiermittelzufuhr unterbrochen.

In der DE-A-2222062 wird eine Schmiereinrichtung für einen Hammer beschrieben, bei der der Schmiermittelfluss mittels einer temperaturabhängigen Drosselvorrichtung steuerbar ist. Dazu ist ein Thermobimetallstreifen vorgesehen, der mit steigender Betriebstemperatur die Schmiermittelzufuhr so weit drosselt, bis schließlich bei Erreichen einer gewissen Temperaturhöhe die Schmiermittelzufuhr vollständig unterbrochen ist.

Der Erfindung liegt die Aufgabe zugrunde, einen Bohr- und/oder Schlaghammer der gattungsbildenden Bauart anzugeben, bei dem sich ein Schmiermittel zuverlässig, lageunabhängig und unabhängig von Zufallseinflüssen zuführen lässt.

Die Aufgabe wird erfindungsgemäß durch einen Bohr- und/oder Schlaghammer gemäß Patentanspruch 1 gelöst. Vorteilhafte Weiterentwicklungen der Erfindung sind in den abhängigen Ansprüchen definiert.

Der erfindungsgemäße, handgehaltene Bohr- und/oder Schlaghammer, nachfolgend als Hammer bezeichnet, weist eine Dosiereinrichtung auf, in der zum einen eine einen Schmierstoffvorrat mit einem Schmierort in kommunizierende Verbindung bringende Dosieröffnung vorgesehen ist und zum anderen eine den Schmierstoff aus dem Schmierstoffvorrat durch die Dosieröffnung zu dem Schmierort fördernde Fördereinrichtung. Die Fördereinrichtung ist derart ausgebildet, dass mit ihr der Schmierstoff aufgrund einer kontrollierten oder vorbestimmten Weg- und/oder Kraftwirkung bedarfsgerecht in jedem Betriebszustand des Hammers aus dem Schmierstoffvorrat durch die Dosieröffnung zu dem Schmierort förderbar ist. Während die aus dem Stand der Technik bekannten Schmiervorrichtungen eine lediglich zufällige Schmierwirkung ermöglichen, die zudem noch eine bestimmte Lage des Hammers erfordern, damit überhaupt Schmierstoff an den Schmierort gelangen kann, stellt die erfindungsgemäße Fördereinrichtung eine vorbestimmbare bzw. berechenbare sowie lageunabhängige Schmierung sicher.

Wenn die Fördereinrichtung Schmierstoff aufgrund einer Wegwirkung fördert, weist sie typischerweise ein geeignetes Förderelement, z. B. eine Förderschnecke o. ä. auf, die in der Dosieröffnung angeordnet sein kann, um den Schmierstoff durch die Dosieröffnung zu fördern.

Eine kontrollierte Weg- oder Kraftwirkung ermöglicht eine bedarfsgerechte Schmierung und lässt sich z. B. dadurch erreichen, dass die Beanspruchung des Hammers oder einzelner Bauelemente und der daraus resultierende Schmierstoffbedarf durch eine später erläuterte Beanspruchungserfassungseinrichtung ermittelt wird, die ihrerseits eine geeignete Steuerung mit der ermittelten Information versorgt. Die Steuerung kontrolliert dann die Weg- oder Kraftwirkung der Fördereinrichtung.

Alternativ dazu lässt sich die Weg- oder Kraftwirkung auch durch entsprechende Auslegung der Fördereinrichtung vorbestimmen. Dies ist z. B. dadurch möglich, dass im Betrieb des Hammers ein kontinuierlicher oder intermittierender, über die Zeit konstanter Schmierstoffstrom realisiert wird. Die Schmierstoffförderung ist dann zwar beanspruchungsunabhängig; sie kann aber derart vorbestimmt sein, dass in jedem Betriebszustand eine ausreichende Schmierung sichergestellt wird.

Bei einer besonders vorteilhaften Ausführungsform der Erfindung erzeugt die Fördereinrichtung eine kombinierte Weg-Kraftwirkung, um den Schmierstoff zu fördern. Dazu weist die Fördereinrichtung eine Druckerzeugungseinrichtung auf, mit der der Schmierstoffvorrat wenigstens zeitweise unter einen erhöhten Druck setzbar ist. Dadurch, dass der Schmierstoffvorrat unter Druck setzbar ist, lässt sich eine kontrollierte Austreibung des Schmierstoffs aus dem Schmierstoffvorrat über die Dosieröffnung zum Schmierort realisieren.

Vorzugsweise lässt sich der Schmierstoffvorrat unter einen gegenüber einer Umgebung des Schmierorts erhöhten Druck setzen. Damit wird sichergestellt, dass auch bei Druckschwankungen im Bereich des Schmierorts, wie dies z. B. in dem die Kurbelwelle aufnehmenden Kurbelraum oder in dem Bereich des Schlagwerks des Hammers der Fall ist, ein Druckunterschied zwischen dem Schmierstoff im Schmierstoffvorrat und der Umgebung des Schmierorts besteht, damit zuverlässig Schmierstoff zum Schmierort gefördert werden kann. Aus der Umgebung des Schmierorts kann der Schmierstoff dann zu dem eigentlichen Schmierort, also z. B. zu einer Lagerstelle für die Kurbelwelle oder einer Gleitfläche zwischen sich bewegenden Kolben im Schlagwerk ohne weiteres Zutun gelangen.

Bei einer besonders vorteilhaften Weiterentwicklung der Erfindung weist die Druckerzeugungseinrichtung eine Federeinrichtung und/oder ein Stellglied auf. Die Federeinrichtung oder das Stellglied können direkt oder auch über ein bewegliches Trennelement, wie eine Membran oder einen Kolben, auf den Schmierstoffvorrat wirken. Die Federeinrichtung kann dabei jede Art von Feder, insbesondere eine Gasfeder oder eine Schraubenfeder oder auch mehrere Federn aufweisen.

Bei einer vorteilhaften Ausführungsform der Erfindung wird als Druckerzeugungseinrichtung eine Schraubenfeder aus einem sogenannten "Memory"-Material verwendet, bei der die eigentliche Federkraft erst ab Erreichen einer bestimmten Temperatur ausgeübt wird. Damit lässt sich z. B. ein Druck auf den Schmierstoffvorrat und somit ein Schmiervorgang erst dann erzeugen, wenn der Hammer eine bestimmte Betriebstemperatur oberhalb der Raumtemperatur erreicht hat und sich die Memory-Feder entsprechend erwärmt hat. Ein aufwendiger Steuerungs- oder Regelungsmechanismus ist dadurch überflüssig.

Wenn anstelle der Federeinrichtung ein Stellglied verwendet wird, kann eine Steuerung vorgesehen werden, die ein Stellglied je nach Anwendungsfall ansteuert.

Bei einer besonders vorteilhaften Ausführungsform der Erfindung ist die Schmierstoffaufnahme auswechselbar an oder in einem Gehäuse des Hammers befestigt. Dadurch kann die Schmierstoffaufnahme in Form einer Austauschkartusche bereitgestellt werden, die vom Bediener in vorbestimmten Zeitabschnitten oder auch aufgrund einer entsprechenden Anzeige in einfacher Weise ausgetauscht werden kann. Damit entfällt ein oft mühseliges, verschmutzungsanfälliges Auffüllen der Schmierstoffaufnahme z. B. durch eine Fettpresse, die möglicherweise am Einsatzort des Hammers nicht vorhanden ist.

Bei einer besonders vorteilhaften Weiterentwicklung der Erfindung ist in der Dosieröffnung, die auch in Form eines Dosierkanals ausgebildet sein kann, eine Ventileinrichtung vorgesehen, mit der die Dosieröffnung öffen- und wenigstens in eine Strömungsrichtung schließbar ist. So lässt sich in die Dosieröffnung z. B. ein Rückschlagventil einsetzen, das das Zurückströmen von verschmutztem oder verbrauchtem Schmierstoff in den Schmierstoffvorrat verhindert.

Wenn die Ventileinrichtung über eine Ventilsteuerung ansteuerbar ist, ist es sogar möglich, gezielt in Abhängigkeit vom Schmierstoffzustand oder anderen Betriebszuständen eine Zufuhr des Schmierstoffs zu steuern. Dazu ist es besonders vorteilhaft, wenn der Schmierstoffvorrat durch die Druckerzeugungseinrichtung im Betrieb des Hammers permanent unter Druck gesetzt ist. Lediglich durch das Ansteuern der Ventileinrichtung lässt sich dann auch die Zufuhr des Schmierstoffs kontrollieren.

Bei einer besonders vorteilhaften Ausführungsform der Erfindung ist eine Beanspruchungserfassungseinrichtung vorgesehen, mit der eine aktuelle und/oder eine längerfristige Beanspruchung des Hammers feststellbar ist. Als Kriterium für eine aktuelle Beanspruchung des Hammers lässt sich eine Temperatur im Inneren des Hammergehäuses, eine Schmierstofftemperatur oder auch eine Vibrationsstärke erfassen. Als Kriterium für eine längerfristige Beanspruchung eignet sich z. B. die Betriebszeit seit der letzten Wartung, eine kumulierte Strom- bzw. Leistungsaufnahme über die Betriebszeit oder aber auch eine Gesamtzahl der Umdrehungen eines Antriebs des Hammers seit der letzten Wartung.

Gegebenenfalls weist die Beanspruchungserfassungseinrichtung zum Erfassen eines geeigneten Kriteriums eine Sensor- oder Zähleinrichtung auf.

Ein von der Beanspruchungserfassungseinrichtung erzeugtes Beanspruchungssignal lässt sich bei einer vorteilhaften Weiterentwicklung der Erfindung einer Auswerteeinrichtung zuführen, die entsprechend die Ventilsteuereinrichtung ansteuert, um das die Dosieröffnung verschließende Ventil zu öffnen oder zu schließen oder eine Stromzufuhr zu dem Antrieb des Hammers zu unterbrechen. Alternativ kann die Auswerteeinrichtung auch die Stellgliedsteuerung ansteuern. Auf diese Weise lässt sich das auf dem geeigneten Kriterium beruhende Beanspruchungssignal zur automatischen Steuerung der Schmierstoffzufuhr verwenden.

Bei einer anderen Ausführungsform der Erfindung wird das Beanspruchungssignal einer Anzeigeeinrichtung zugeführt, die in Form eines optischen oder akustischen Signals einen Bediener über den Beanspruchungszustand oder einen Wartungsbedarf informiert. Eine derartige Inspektionsanzeige ermöglicht es dem Bediener im Vorhinein zu erkennen, ob der Hammer einer umfangreichen Wartung unterzogen oder z. B. nur die Schmierstoffaufnahme mit Schmierstoff aufgefüllt werden muss. Anhand der unterschiedlichen Beanspruchungskriterien ist hier eine differenzierte Information für den Bediener möglich.

Um eine stetige Versorgung des oder der Schmierorte im Innern des Hammers zu gewährleisten, ist es besonders zweckmäßig, wenn verbrauchter oder verschmutzter Schmierstoff aus dem Innern des Hammergehäuses, z. B. aus dem Kurbelraum oder aus dem Bereich eines Schlagwerks, abgeführt werden kann. Dies ist über einen den Schmierort mit der Umgebung in kommunizierende Verbindung bringenden Bereich einer Werkzeugaufnahme möglich.

Diese und weitere Merkmale und Vorteile der Erfindung werden nachfolgend anhand von Beispielen unter Zuhilfenahme der begleitenden Figuren näher erläutert. Es zeigen:
- **Fig. 1**: einen schematischen Schnitt durch ein Schlagwerk eines erfindungsgmäßen Bohr- und/oder Schlaghammers;
- **Fig. 2**: eine vergrößerte Schnittdarstellung einer zweiten Ausführungsform der Erfindung;
- **Fig. 3**: eine vergrößerte schematische Schnittdarstellung einer dritten Ausführungsform der Erfindung; und
- **Fig. 4**: eine vergrößerte Schnittdarstellung einer vierten Ausführungsform der Erfindung.

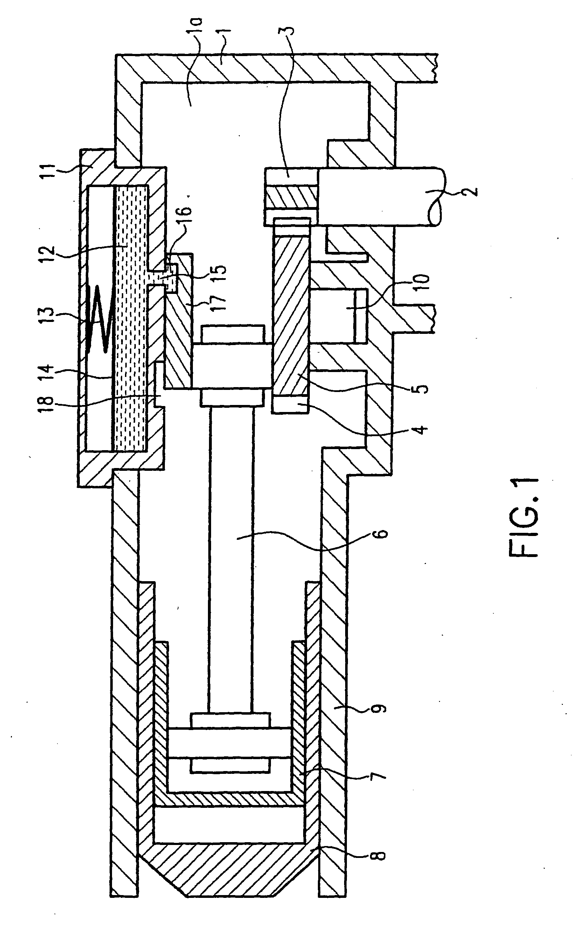

Fig. 1 zeigt in schematischer Schnittdarstellung eine erste Ausführungsform der Erfindung in Form eines an sich bekannten Schlagwerks in einem Bohr-und/oder Schlaghammer, nachfolgend als "Hammer" bezeichnet.

In einem Kurbelraum 1a eines Gehäuses 1 ist eine Antriebswelle 2 eines nicht dargestellten Antriebsmotors gelagert, die über ein Ritzel 3 ein Zahnrad 4 drehend antreibt. Das Zahnrad 4 ist Bestandteil einer Kurbelwelle 5, die ein Pleuel 6 hin- und hertreibt.

Am anderen Ende des Pleuels 6 ist ein Antriebskolben 7 angelenkt, der in einer hohlen Aufnahme eines Schlagkolbens 8 axial hin- und herbeweglich ist. Der Schlagkolben 8 ist in einem sogenannten Schlagwerksrohr 9, das Bestandteil des Gehäuses 1 sein kann, ebenfalls axial beweglich geführt. Der Schlagkolben 8 schlägt im Betrieb auf einen nicht dargestellten Schaft eines Werkzeugs oder auf einen zwischengeschalteten Döpper.

Die Funktion eines derartigen Schlagwerks ist seit langem bekannt und bereits in vielfältiger Weise beschrieben worden, so dass sich eine weitere Darstellung erübrigt.

Die Kurbelwelle 5 ist auf einer Seite mittels eines Zapfens 10 im Gehäuse 1 gelagert. An der gegenüberliegenden Seite kann die Kurbelwelle 5 ebenfalls in bekannter Weise mit Hilfe eines nicht dargestellten Zapfens gelagert werden. Alternativ dazu ist es möglich, dem Zapfen 10 gegenüberliegend einen sogenannten "Abstützbuckel" vorzusehen, wie er z. B. aus der DE 198 20 218 A1 bekannt ist. Dabei kann eine auf die Kurbelwelle 5 wirkende Axialkraft über eine ballige Kontur, die auf Höhe der Drehachse der Kurbelwelle 5 angeordnet ist, an einer Innenseite des Gehäuses 1 abgestützt werden. Der Bereich dieser Abstützung muss gut geschmiert werden ("Schmierort").

In axialer Verlängerung der Kurbelwelle 5 ist ein Schmierstoffdepot vorgesehen, das eine als Schmierstoffbehälter dienende Schmierstoffaufnahme 11 sowie einen darin enthaltenen Schmierstoffvorrat 12 aufweist.

Als Schmierstoff wird vorzugsweise höherviskoses Fett verwendet. Selbstverständlich ist es aber auch möglich, niederviskose Fettschmierstoffe oder Öl zu verwenden. Aus Gründen der vereinfachten Dichtbarkeit ist jedoch Fett besonders geeignet.

Die Schmierstoffaufnahme 11 kann bei einer in Fig. 1 nicht gezeigten Variante auch als Kartusche auswechselbar an dem Gehäuse 1 des Hammers befestigt sein. Wenn der Schmierstoffvorrat 12 aufgebraucht ist, muss der Bediener lediglich die Schmierstoffaufnahme 11 austauschen und durch eine neue ersetzen.

Der Schmierstoffvorrat 12 im Inneren der Schmierstoffaufnahme 11 wird durch eine Druckerzeugungseinrichtung permanent unter Druck gesetzt. Die Druckerzeugungseinrichtung weist eine Feder 13 sowie einen von der Feder beaufschlagten Kolben 14 auf. Durch die Feder 13 und den Kolben 14 wird permanent Schmierstoff 12 gegen eine Dosieröffnung 15 gedrückt, die im Boden der Schmierstoffaufnahme 11 ausgebildet ist.

In Abhängigkeit von einer Drehstellung der Kurbelwelle 5 korrespondiert die Dosieröffnung 15 mit einer als "Schöpfkelle" dienenden Ausnehmung 16, die in einer Scheibe der Kurbelwelle 5 ausgebildet ist. Wenn sich die Ausnehmung 16 aufgrund der Drehbewegung der Kurbelwelle 5 weiterdreht, wird die Dosieröffnung 15 wieder durch die Scheibe 17 verschlossen.

Wenn sich die Ausnehmung 16 um etwa 180° gedreht hat, korrespondiert sie mit einer Entnahmestelle 18, an der der Schmierstoff aus der Ausnehmung 16 herausgeschleudert wird und in das Innere des Gehäuses 1, also in den Kurbelraum 1a oder das Schlagwerksrohr 9, gelangen kann.

Der Querschnitt der Dosieröffnung 15 kann in Abhängigkeit von der Viskosität des verwendeten Schmierstoffs gestaltet werden. Bei niedrigviskosen Schmierstoffen kann es sich darüber hinaus anbieten, zur Verminderung der Querschnittsfläche der Dosieröffnung 15 einen Einsatz in der Dosieröffnung 15 zu befestigen.

Besonders wichtige Schmierorte sind einerseits die Lagerstellen der Kurbelwelle 5 und das die Kurbelwelle drehende Getriebe, bestehend aus Ritzel 3 und Zahnrad 4, sowie andererseits das eigentliche Schlagwerk, bestehend aus Antriebskolben 7, Schlagkolben 8 und Schlagwerksrohr 9. Insbesondere im Schlagwerk können aufgrund der hohen umgesetzten Leistung und der damit verbundenen Reibung auch sehr hohe Temperaturen erreicht werden, die eine ausreichende Schmierung zwingend erfordern und dementsprechend hohe Anforderungen an eine geeignete Schmierung und den Schmierstoff stellen.

Selbstverständlich kann die Kurbelwelle auch in anderer Weise gelagert und geschmiert werden; als dies in Fig. 1 gezeigt ist.

Anstelle des Kolbens 14 und der Feder 13 kann auch eine Gasdruckfeder oder ein unter Druck stehender Gasvorrat eingesetzt werden, der gegen eine als Kolben dienende Membran drückt. Verschiedene Möglichkeiten der Druckerzeugung im Schmierstoffvorrat 12 sind dem Fachmann geläufig, so dass sich eine detaillierte Beschreibung erübrigt.

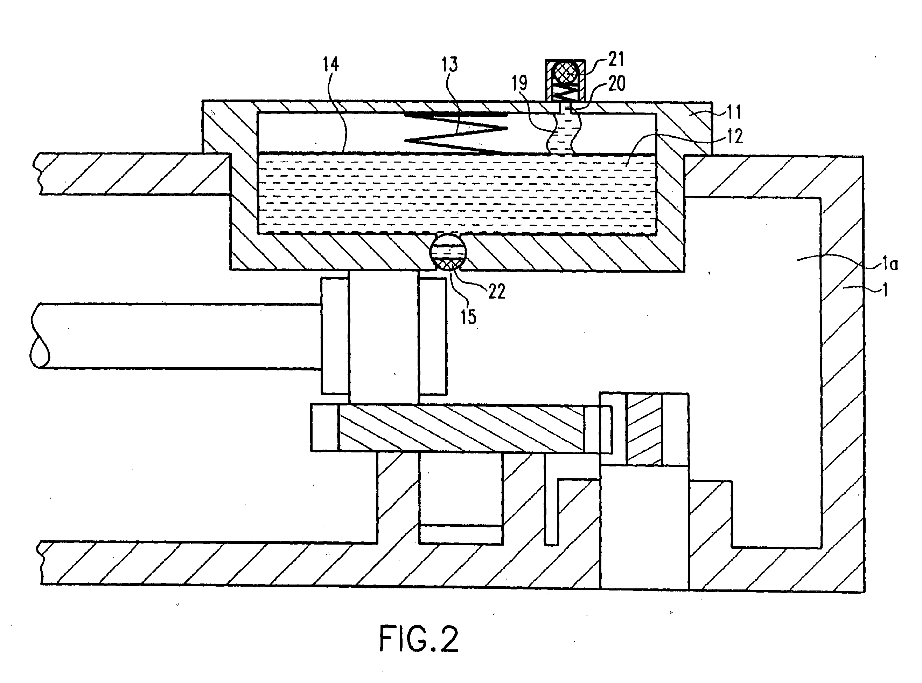

Fig. 2 zeigt eine zweite Ausführungsform der Erfindung als Variante von Fig. 1. Da das Antriebssystem, bestehend aus Kurbelwelle, Pleuel und Schlagwerk unverändert ist und insoweit auch nicht den Gegenstand der Erfindung betrifft, wird auf eine erneute Beschreibung verzichtet.

In der Schmierstoffaufnahme 11 ist der Schmierstoffvorrat 12 untergebracht, der - wie in Fig. 1 - durch eine Feder 13 und einen lediglich stilisiert dargestellten Kolben 14 unter Druck gesetzt wird.

Der Schmierstoffvorrat 12 steht über einen Kanal 19 mit einer Nachfüllöffnung 20 in Verbindung, vor der ein Rückschlagventil 21 angeordnet ist. Über das Rückschlagventil 21 und die Nachfüllöffnung 20 sowie den Kanal 19 kann Schmierstoff in den Schmierstoffvorrat 12 nachgefüllt werden. Dies ist z. B. in bekannter Weise durch eine Fettpresse möglich.

In die Dosieröffnung 15 ist eine Ventileinrichtung 22 eingesetzt. Die in Fig. 2 gezeigt Ventileinrichtung 22 besteht aus einem drehbaren Ventilkörper, der von einer Bohrung gequert wird. Je nach Stellung des Ventilkörpers ist die Dosieröffnung 15 geöffnet, so dass Schmierstoff aus dem Schmierstoffvorrat 12 in den Kurbelraum la im Inneren des Gehäuses 1 gelangen kann, oder die Dosieröffnung 15 ist versperrt.

Eine Ansteuerung der Ventileinrichtung 22 erfolgt durch eine nicht dargestellte Ventilsteuereinrichtung. Als Kriterium für die Steuerung der Ventileinrichtung 22 bestehen zahlreiche Möglichkeiten. Zum einen kann das Öffnen der Dosieröffnung 15 durch die Ventileinrichtung 22 intermittierend in vorgegebenen Zeittakten erfolgen, wenn sich der Hammer im Betrieb befindet. Diese Ansteuerung ist sehr einfach, hat aber den Nachteil einer möglicherweise nicht bedarfsgerechten Schmierung.

Daher ist es besonders vorteilhaft, wenn mit Hilfe einer nicht dargestellten Beanspruchungserfassungseinrichtung eine tatsächliche aktuelle oder längerfristige Beanspruchung des Hammers festgestellt werden kann. Als Kriterium für die Beanspruchung eignet sich z. B. die Temperatur im Inneren des Bohrhammers. Immer dann, wenn die Temperatur einen gewissen Wert erreicht, erkennt die Beanspruchungserfassungseinrichtung, dass sich der Hammer im Betrieb befindet und einer entsprechenden Belastung ausgesetzt ist. Die Temperatur kann vorzugsweise durch einen Temperatursensor erfasst werden.

Eine andere Möglichkeit besteht darin, die Schmierstoffmenge im Bereich des Schmierorts, hier also an den Lagerstellen der Kurbelwelle 5, der Verzahnungen oder im Schlagwerk durch geeignete Sensoren zu ermitteln.

Ergänzend kann die (Rest-)Schmierstoffmenge im Schmierstoffdepot erfasst werden, um den Bediener rechtzeitig darauf hinzuweisen, wenn der Schmierstoffvorrat 12 nachgefüllt werden muss, oder die Schmierstoffaufnahme 11 durch eine neue ausgetauscht werden muss.

Andere Kriterien für die Beanspruchung des Hammers sind die Betriebszeit (z. B. seit der letzten Wartung), die gesamte, also summierte Strom- bzw. Leistungsaufnahme über die Betriebszeit oder auch die Gesamtzahl der Umdrehungen des Antriebs des Hammers. Insbesondere bei Hämmern mit elektronisch gesteuertem Antrieb ist es ohne großen Aufwand möglich, die Stromaufnahme oder die Antriebsfrequenz bzw. -drehzahl zu erfassen und über die Betriebszeit aufzusummieren. Bei Erreichen vordefinierter Zwischen- oder Grenzwerte kann jeweils die Ventileinrichtung 22 zum Öffnen der Dosieröffnung 15 betätigt werden.

Darüber hinaus ist es möglich, die auf diese Weise gewonnene Information zur Anzeige eines Wartungszustands des Hammers zu verwenden.

Im Rahmen von Vorversuchen lässt sich ermitteln, wieviele Betriebsstunden, Motorumdrehungen o. ä. dem Hammer mit einer Füllung der Schmierstoffaufnahme 11 zuzumuten sind und wann dementsprechend entweder der Schmierstoffvorrat 12 wieder aufgefüllt werden muss oder der Hammer einer größeren Wartung zu unterziehen ist. Über akustische oder optische Anzeigen kann der Bediener rechtzeitig davon in Kenntnis gesetzt werden. Er ist also nicht wie in der Vergangenheit gezwungen, selbst Wartungsintervalle zu überwachen und einzuhalten. Vielmehr ist die Überwachungsfunktion vollständig in den erfindungsgemäßen Hammer integriert. Dies kann soweit gehen, dass die Beanspruchungserfassungseinrichtung oder eine ein entsprechendes Beanspruchungssignal auswertende Auswerteeinrichtung den Antriebsmotor des Hammers abschaltet, wenn der Wartungszustand des Hammers eine dauerhafte Schädigung befürchten lässt.

Mit Hilfe der Beanspruchungserfassungseinrichtung und der von ihr mit einem entsprechenden Beanspruchungssignal versorgten Auswerteeinrichtung bzw. der Anzeigeeinrichtung ist es möglich, dass der Bediener jederzeit darüber informiert wird, ob er Schmierstoff nachfüllen, die als Wechselkartusche ausgeführte Schmierstoffaufnahme 11 austauschen oder den Hammer einer Generalwartung unterziehen muss.

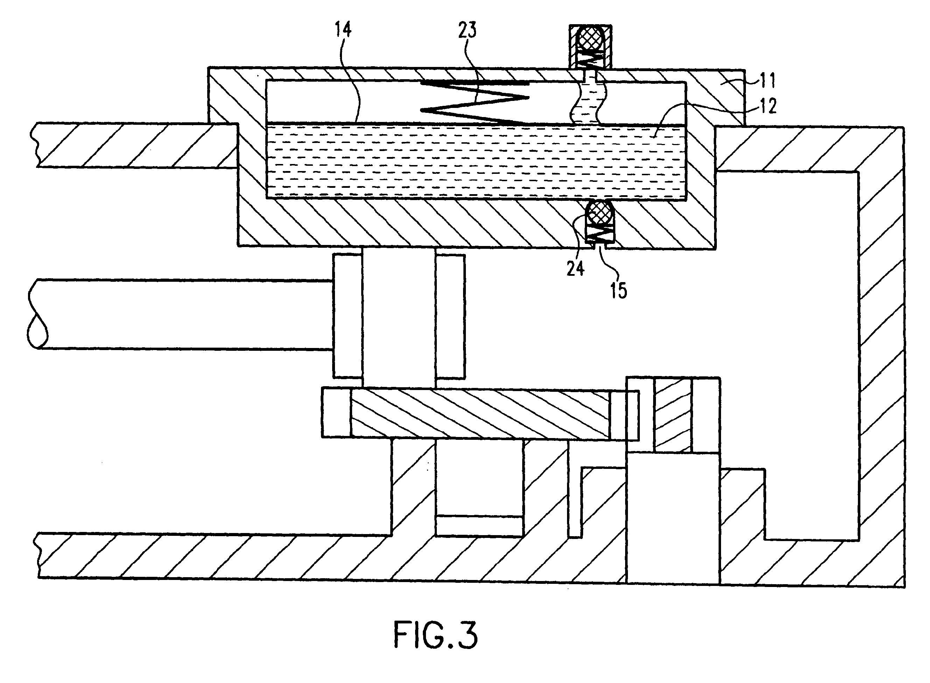

Fig. 3 zeigt eine weitere Ausführungsform der Erfindung, bei der anstelle der Feder 13 eine sogenannte "Memory"-Feder 23 eingesetzt ist und auf den Kolben 14 und somit den Schmierstoffvorrat 12 im Innern der Schmierstoffaufnahme 11 wirkt.

Die Nachfüllbarkeit des Schmierstoffvorrats 12 ist ähnlich realisiert wie bei der zweiten Ausführungsform gemäß Fig. 2, so dass sich eine erneute Beschreibung erübrigt.

In die Dosieröffnung 15 ist ein Rückschlagventil 24 eingesetzt, um ein Zurückströmen von verbrauchtem oder verschmutztem Schmierstoff in den Schmierstoffvorrat 12 zu vermeiden. Über das Rückschlagventil 24 ist somit lediglich das Ausbringen von frischem Schmierstoff aus dem Schmierstoffvorrat 12 möglich.

Die Memory-Feder 23 besteht aus einem speziellen, an sich bekannten Stahl und hat die Eigenschaft, dass sie erst bei Überschreiten eines vorbestimmten Temperaturwerts das Bestreben hat, in ihre ursprüngliche Form zurückzukehren und dadurch eine Federkraft auf den Kolben 14 und somit den Schmierstoffvorrat 12 auszuüben. Dies wird vorteilhaft dadurch ausgenutzt, dass erst bei einer sich im Betrieb des Hammers einstellenden Erwärmung des Hammers und damit der Memory-Feder 23 die notwendige Federkraft erzeugt wird, um Schmierstoff aus der Dosieröffnung 15 zu drücken.

Diese Variante hat den großen Vorteil, dass sich weitere Steuereinrichtungen und gegebenenfalls Sensoren erübrigen, was insbesondere die Betriebssicherheit des Hammers zusätzlich erhöht.

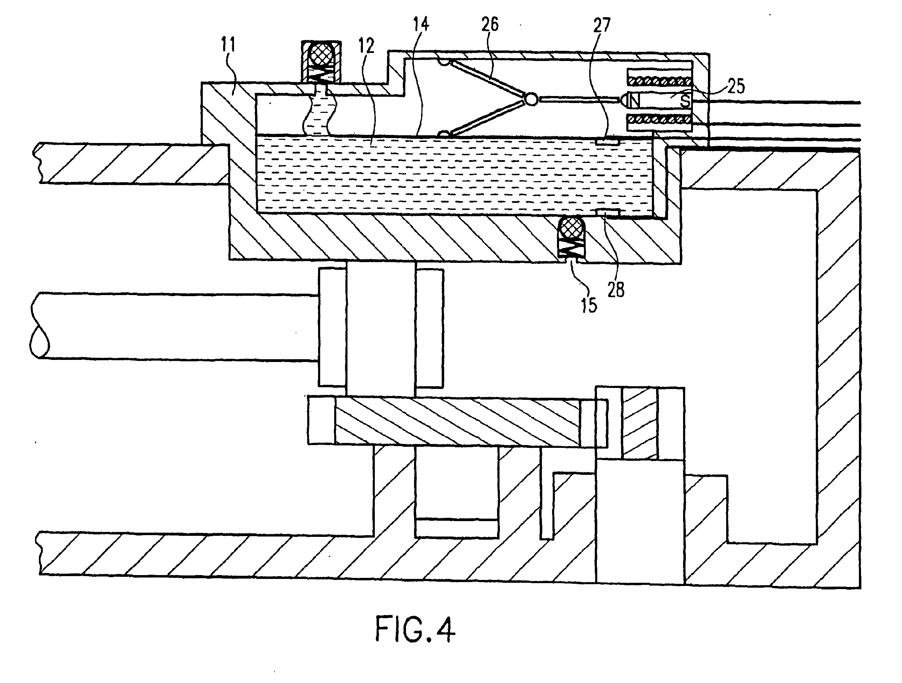

In Fig. 4 ist eine vierte Ausführungsform der Erfindung dargestellt, die sich - im Gegensatz zu Fig. 3 - durch eine besonders aufwendige, dafür aber feinfühlig einstellbare Druckerzeugungseinrichtung auszeichnet.

Der Schmierstoffvorrat 12 in der Aufnahme 11 wird durch ein Stellglied 25 und einen von dem Stellglied 25 beaufschlagten und gegen den Kolben 14 wirkenden Hebelmechanismus 26 unter Druck gesetzt. Hierbei reicht es unter Umständen aus, lediglich für eine geringe Druckerhöhung im Schmierstoffvorrat 12 zu sorgen, um einen kontinuierlichen Schmiermittelfluss über die Dosieröffnung 15 zu erreichen.

Das auf elektromagnetischem Prinzip basierende Stellglied 25 kann entweder mit konstantem Strom erregt werden, um eine weitgehend konstante Kraft auf den Kolben 14 auszuüben, wobei gegebenenfalls der Hebelmechanismus 26 konstruktiv anzupassen ist. Alternativ dazu ist es auch möglich, die von dem Stellglied 25 erzeugbare Kraft und damit die Druckwirkung auf den Schmierstoffvorrat 12 in Abhängigkeit von der tatsächlichen Beanspruchung des Hammers einzustellen. Dazu wird das Signal der Beanspruchungserfassungseinrichtung entsprechend ausgewertet und dem Stellglied 25 zugeleitet.

Wie bereits beschrieben, ist es zweckmäßig, wenn der Bediener über den Füllungsgrad der Schmierstoffaufnahme 11 informiert wird, insbesondere wenn die Schmierstoffaufnahme 11 geleert ist. Dazu ist bei der vierten Ausführungsform ein Kontaktsensor vorgesehen, der einen an dem Kolben 14 angeordneten ersten Kontakt 27 sowie einen am Boden der Schmierstoffaufnahme 11 vorgesehenen zweiten Kontakt 28 aufweist. Wenn sich der erste Kontakt 27 und der zweite Kontakt 28 berühren, wird ein Kontrollstromkreis geschlossen und ein entsprechendes Signal erzeugt, das den Bediener über eine Anzeige darüber informieren kann, dass der Schmierstoffvorrat 12 zur Neige gegangen ist.

Selbstverständlich lassen sich auch zahlreiche andere, dem Fachmann geläufige Mittel zur Füllstandsanzeige einsetzen.

Anstelle des in Fig. 4 gezeigten elektromagnetischen Stellglieds sind auch andere Arten von Stellgliedern möglich, so z. B. Stellglieder mit motorischen, elektromechanischen oder piezoelektrischen Wirkelementen. Die Aufgabe des Stellgliedes besteht lediglich darin, den Kolben 14 oder eine entsprechende Membran derart mit einer Kraft zu beaufschlagen, dass der Schmierstoffvorrat 12 unter Druck gesetzt wird.

In der Praxis hat sich herausgestellt, dass die Schmierung besonders effektiv ist, wenn verbrauchter oder verschmutzter Schmierstoff aus dem Inneren des Gehäuses wieder abgeführt werden kann. Dazu ist bei dem erfindungsgemäßen Hammer im Bereich einer nicht dargestellten Werkzeugführung bzw. einem Einsteckende für einen Werkzeugschaft bewusst eine - wenn auch kleine - Öffnung in Form eines Spalts bzw. einer gewollten Undichtigkeit vorgesehen, über die Schmierstoff aus dem Gehäuse 1 austreten kann.

Dadurch wird in gewissem Maße eine Regeneration des Schmierstoffs im Inneren des Gehäuses 1 erreicht.

Aus obiger Beschreibung ergibt sich, dass die Erfindung in zahlreichen Varianten realisierbar ist. So bestehen zum einen verschiedene Möglichkeiten, einen Druck in dem Schmierstoffvorrat 12 zu erzeugen, von denen oben nur einige wenige erläutert worden sind. Auch die Ventilansteuerung bzw. die Anzeige des Wartungszustands lässt sich auf verschiedene Weise realisieren. Insoweit dient die obige Beschreibung lediglich zur exemplarischen Erläuterung, nicht aber zur Beschränkung des Schutzumfangs.

## Patentansprüche

1. Handgehaltener Bohr- und/oder Schlaghammer mit einem Schlagwerk und einer Schmiervorrichtung zum Schmieren des Schlagwerks, mit
- einem Schmierstoffdepot, das eine Schmierstoffaufnahme (11) und einen darin enthaltenen Schmierstoffvorrat (12) aufweist; und mit
- einer Dosiereinrichtung, die eine den Schmierstoffvorrat (12) mit einem Schmierort verbindende Dosieröffnung (15) aufweist;
**dadurch gekennzeichnet, dass** die Dosiereinrichtung eine Fördereinrichtung aufweist, mit der der Schmierstoff aufgrund einer kontrollierten oder vorbestimmten Weg- und/oder Kraftwirkung bedarfsgerecht in jedem Betriebszustand des Hammers aus dem Schmierstoffvorrat (12) durch die Dosieröffnung (15) zu dem Schmierort förderbar ist.

2. Bohr- und/oder Schlaghammer nach Anspruch 1, **dadurch gekennzeichnet, dass** die Fördereinrichtung ein in der Dosieröffnung (15) vorgesehenes, bewegliches Förderelement aufweist, dessen Bewegung den Schmierstoff zu dem Schmierort fördert.

3. Bohr- und/oder Schlaghammer nach Anspruch 1, **dadurch gekennzeichnet, dass** die Fördereinrichtung eine Druckerzeugungseinrichtung aufweist, mit der der Schmierstoffvorrat (12) wenigstens zeitweise unter einen erhöhten Druck setzbar ist.

4. Bohr- und/oder Schlaghammer nach Anspruch 3, **dadurch gekennzeichnet, dass** die Druckerzeugungseinrichtung eine Federeinrichtung (13, 23) und/oder ein Stellglied (25) aufweist, wobei die Federeinrichtung (13, 23) und/oder das Stellglied (25) direkt oder über ein bewegliches Trennelement (14) auf den Schmierstoffvorrat wirken.

5. Bohr- und/oder Schlaghammer nach Anspruch 4, **dadurch gekennzeichnet, dass** die Federeinrichtung wenigstens eine Gasfeder, eine Kegelfeder, eine Blattfeder oder eine Schraubenfeder (13, 23) aufweist.

6. Bohr- und/oder Schlaghammer nach Anspruch 5, **dadurch gekennzeichnet, dass** die Schraubenfeder (23) aus einem Material besteht, das bei einer Temperatur oberhalb von einem bestimmten, gegenüber einer Raumtemperatur erhöhten Temperaturwert eine andere Form und Federeigenschaft einnimmt als unterhalb dieses Temperaturwerts, so dass die Schraubenfeder (23) bei einer Erwärmung auf eine Temperatur oberhalb des Temperaturwerts einen deutlich höheren Druck auf den Schmierstoffvorrat (12) ausübt, als wenn die Temperatur der Schraubenfeder (23) unterhalb des Temperaturwertes liegt.

7. Bohr- und/oder Schlaghammer nach Anspruch 4, **dadurch gekennzeichnet, dass** das Stellglied über eine Steuerung ansteuerbar ist und/oder motorische, elektromechanische, elektromagnetische (25) und/oder piezoelektrische Wirkelemente aufweist.

8. Bohr- und/oder Schlaghammer nach einem der Ansprüche 1 bis 7, **dadurch gekennzeichnet, dass** die Schmierstoffaufnahme (11) auswechselbar an oder in einem Gehäuse (1) des Bohr- und/oder Schlaghammers befestigt ist.

9. Bohr- und/oder Schlaghammer nach Anspruch 8, **dadurch gekennzeichnet, dass** die Schmierstoffaufnahme (11) eine Nachfüllöffnung (20) aufweist, über die der Schmierstoffvorrat (12) auffüllbar ist.

10. Bohr- und/oder Schlaghammer nach einem der Ansprüche 1 bis 9, **dadurch gekennzeichnet, dass** in der Dosieröffnung (15) eine Ventileinrichtung (16, 17; 22; 24) vorgesehen ist, mit der die Dosieröffnung (15) öffen- und wenigstens in eine Strömungsrichtung schließbar ist.

11. Bohr- und/oder Schlaghammer nach Anspruch 10, **dadurch gekennzeichnet, dass** die Ventileinrichtung (22) über eine Ventilsteuereinrichtung ansteuerbar ist.

12. Bohr- und/oder Schlaghammer nach Anspruch 11, **dadurch gekennzeichnet, dass** die Dosieröffnung (15) durch die Ventileinrichtung (16, 17; 22) vollständig schließbar ist und dass der Schmierstoffvorrat (12) durch die Druckerzeugungseinrichtung (13, 14) wenigstens während des Betriebs des Bohr- und/oder Schlaghammers permanent unter Druck setzbar ist.

13. Bohr- und/oder Schlaghammer nach einem der Ansprüche 1 bis 12, **dadurch gekennzeichnet, dass**
- eine Beanspruchungserfassungseinrichtung vorgesehen ist, mit der eine aktuelle und/oder längerfristige Beanspruchung des Bohr- und/oder Schlaghammers feststellbar ist; und dass
- die Festellung der Beanspruchung erfolgt durch Erfassen wenigstens eines Kriteriums ausgewählt aus der Gruppe Temperatur im Inneren des Bohr- und/oder Schlaghammers, Schmierstofftemperatur, Schmierstoffmenge im Bereich des Schmierorts, Schmierstoffmenge im Schmierstoffdepot, Schmierstoffqualität und/oder Schmierstoffreinheit im Bereich des Schmierorts, Betriebszeit, gesamte Stromaufnahme über die Betriebszeit, gesamte Leistungsaufnahme über die Betriebszeit, Gesamtzahl der Umdrehungen eines Antriebs des Bohr- und/oder Schlaghammers über die Betriebszeit, Vibrationsstärke, Geräuschentwicklung.

14. Bohr- und/oder Schlaghammer nach Anspruch 13, **dadurch gekennzeichnet, dass** die Betriebszeit die Summe aller Zeiträume ist, in der sich der Bohr- und/oder Schlaghammer in Betrieb befindet, ab einem bestimmten Zeitpunkt, insbesondere einem Zeitpunkt der letzten Wartung.

15. Bohr- und/oder Schlaghammer nach 13 oder 14, **dadurch gekennzeichnet, dass** die Beanspruchungserfassungseinrichtung wenigstens eine Sensoreinrichtung aufweist.

16. Bohr- und/oder Schlaghammer nach einem der Ansprüche 13 bis 15, **dadurch gekennzeichnet, dass** durch die Beanspruchungserfassungseinrichtung ein der Beanspruchung entsprechendes Beanspruchungssignal erzeugbar ist.

17. Bohr- und/oder Schlaghammer wenigstens nach Anspruch 11 und Anspruch 16, **dadurch gekennzeichnet, dass** das Beanspruchungssignal einer Auswerteeinrichtung zuführbar ist, die in Abhängigkeit von dem Beanspruchungssignal die Ventilsteuereinrichtung ansteuert, um das Ventil zu öffnen oder zu schließen, und/oder eine Stromzufuhr zu dem Antrieb unterbricht und/oder das Stellglied (25) der Druckerzeugungseinrichtung ansteuert.

18. Bohr- und/oder Schlaghammer nach Anspruch 16 oder 17, **dadurch gekennzeichnet, dass** das Beanspruchungssignal einer Anzeigeeinrichtung zuführbar ist, zum Ausgeben eines optischen oder akustischen Signals in Abhängigkeit von der dem Beanspruchungssignal entsprechenden Beanspruchung und/oder zum Ausgeben eines Signals zum Informieren über einen Wartungsbedarf.

19. Bohr- und/oder Schlaghammer nach einem der Ansprüche 1 bis 18, **dadurch gekennzeichnet, dass** der Schmierort über einen Bereich einer Werkzeugaufnahme mit der Umgebung in kommunizierender Verbindung steht, zum Abführen von verbrauchtem oder verschmutztem Schmierstoff.

## Claims

1. Handheld drilling and/or striking hammer having a percussion mechanism and a lubricating device for lubricating the percussion mechanism, comprising
- a lubricant reservoir which comprises a lubricant receptacle (11) and a lubricant supply (12) contained therein; and
- a metering device which comprises a metering orifice (15) which connects the lubricant supply (12) to a point to be lubricated;
**characterised in that** the metering device comprises a conveying device, with which the lubricant can be conveyed on the basis of a controlled or predetermined path and/or force effect as required in each operating state of the hammer from the lubricant supply (12) through the metering orifice (15) to the point to be lubricated.

2. Drilling and/or striking hammer as claimed in claim 1, **characterised in that** the conveying device comprises a movable conveying element which is provided in the metering orifice (15) and whose movement conveys the lubricant to the point to be lubricated.

3. Drilling and/or striking hammer as claimed in claim 1, **characterised in that** the conveying device comprises a pressure-generating device, with which the lubricant supply (12) can be placed at least intermittently under an increased pressure.

4. Drilling and/or striking hammer as claimed in claim 3, **characterised in that** the pressure-generating device comprises a spring device (13, 23) and/or an actuating element (25), wherein the spring device (13, 23) and/or the actuating element (25) act(s) upon the lubricant supply directly or via a movable separating element (14).

5. Drilling and/or striking hammer as claimed in claim 4, **characterised in that** the spring device comprises at least one gas spring, a conical spring, a plate spring, or a helical spring.

6. Drilling and/or striking hammer as claimed in claim 5, **characterised in that** the helical spring (23) is made of a material which, at a temperature above a predetermined temperature value which is higher than a room temperature, assumes a different shape and spring characteristic than below this predetermined temperature value, so that when heated to a temperature above the temperature value, the helical spring (23) exerts a significantly higher pressure upon the lubricant supply (12) than when the temperature of the helical spring (23) is below the temperature value.

7. Drilling and/or striking hammer as claimed in claim 4, **characterised in that** the actuating element can be controlled via a controller, and/or comprises motor-driven, electromechanical, electromagnetic (25) and/or piezoelectric active elements.

8. Drilling and/or striking hammer as claimed in any one of claims 1 to 7, **characterised in that** the lubricant receptacle (11) is fastened in an interchangeable manner on or in a housing (1) of the drilling and/or striking hammer.

9. Drilling and/or striking hammer as claimed in claim 8, **characterised in that** the lubricant receptacle (11) has a refill orifice (20), via which the lubricant supply (12) can be filled.

10. Drilling and/or striking hammer as claimed in any one of claims 1 to 9, **characterised in that** in the metering orifice (15) there is provided a valve device (16, 17; 22, 24), with which the metering orifice (15) can be opened and, in at least one direction of flow, can be closed.

11. Drilling and/or striking hammer as claimed in claim 10, **characterised in that** the valve device (22) can be controlled via a valve control device.

12. Drilling and/or striking hammer as claimed in claim 11, **characterised in that** the metering orifice (15) can be completely closed by the valve device (16, 17; 22), and that the lubricant supply (12) can be placed permanently under pressure by the pressure-generating device (13, 14) at least during the operation of the drilling and/or striking hammer.

13. Drilling and/or striking hammer as claimed in any one of claims 1 to 12,
**characterised in that**
- a stress detection device is provided, with which a current and/or long-term stress of the drilling and/or striking hammer can be determined; and
- the stress is determined by detection of at least one criterion selected from the following group: temperature in the interior of the drilling and/or striking hammer, lubricant temperature, quantity of lubricant in the region of the point to be lubricated, quantity of lubricant in the lubricant reservoir, quality of lubricant and/or lubricant purity in the region of the point to be lubricated, operating time, total current consumption over the operating time, total power consumption over the operating time, total number of rotations of a drive of the drilling and/or striking hammer over the operating time, vibration strength, development of noise.

14. Drilling and/or striking hammer as claimed in claim 13, **characterised in that** the operating time is the sum of all time periods, in which the drilling and/or striking hammer is in operation from a specific point in time, in particular the time of the last maintenance.

15. Drilling and/or striking hammer as claimed in claim 13 or 14, **characterised in that** the stress detection device comprises at least one sensor device.

16. Drilling and/or striking hammer as claimed in claims 13 to 15, **characterised in that** a stress signal corresponding to the stress can be produced by the stress detection device.

17. Drilling and/or striking hammer according to claim 11 and claim 16, **characterised in that** the stress signal can be supplied to an evaluation device which, in dependence upon the stress signal, drives the valve control device in order to open or close the valve, and/or interrupts a supply of current to the drive and/or drives the actuating element (25) of the pressure-generating device.

18. Drilling and/or striking hammer as claimed in claim 16 or 17, **characterised in that** the stress signal can be supplied to a display device in order to output an optical or acoustic signal in dependence upon the stress corresponding to the stress signal, and/or in order to output a signal for providing information regarding a maintenance requirement.

19. Drilling and/or striking hammer as recited in claims 1 to 18, **characterised in that** the point to be lubricated is in communicating connection with the surrounding area via a region of a tool receptacle, in order to carry off used or contaminated lubricant.

## Revendications

1. Marteau perforateur et/ou percuteur tenu à la main pourvu d'un dispositif percuteur et d'un dispositif de lubrification pour la lubrification du dispositif percuteur, comportant
- un dépôt de lubrifiant, qui présente un logement de lubrifiant (11) et une réserve de lubrifiant (12) contenue à l'intérieur ; et avec
- un dispositif de dosage qui présente une ouverture de dosage (15) reliant la réserve de lubrifiant (12) à un lieu de lubrification,
**caractérisé en ce que** le dispositif de dosage présente un dispositif de transport avec lequel le lubrifiant peut être transporté en raison d'un effet de course et/ou de force contrôlé ou prédéfini en fonction des besoins, dans tout état de service du marteau, depuis la réserve de lubrifiant (12) au lieu de lubrification en passant par l'ouverture de dosage (15).

2. Dispositif perforateur et/ou percuteur selon la revendication 1, **caractérisé en ce que** le dispositif de transport présente un élément de transport mobile, prévu dans l'ouverture de dosage (15), dont le déplacement transporte le lubrifiant au lieu de lubrification.

3. Marteau perforateur et/ou percuteur selon la revendication 1, **caractérisé en ce que** le dispositif de transport présente un dispositif de production de pression avec lequel la réserve de lubrifiant (12) peut être placée au moins temporairement sous une pression élevée.

4. Marteau perforateur et/ou percuteur selon la revendication 3, **caractérisé en ce que** le dispositif de production de pression présente un dispositif à ressort (13, 23) et/ou un actionneur (25), le dispositif à ressort (13, 23) et/ou l'actionneur (25) agissant directement ou au moyen d'un élément de séparation (14) mobile sur la réserve de lubrifiant.

5. Marteau perforateur et/ou percuteur selon la revendication 4, **caractérisé en ce que** le dispositif à ressort présente au moins un ressort à gaz, un ressort conique, un ressort à lame ou un ressort hélicoïdal (13, 23).

6. Marteau perforateur et/ou percuteur selon la revendication 5, **caractérisé en ce que** le ressort hélicoïdal (23) est à base d'un matériau qui, à une valeur de température définie, supérieure par rapport à une température ambiante, prend une autre forme et une autre propriété élastique qu'au-dessous de cette valeur de température, de sorte que le ressort hélicoïdal (23) exerce lors d'un réchauffement jusqu'à une température supérieure à la valeur de température une pression nettement supérieure sur la réserve de lubrifiant (12) que lorsque la température du ressort hélicoïdal (23) se situe au-dessous de la valeur de température.

7. Marteau perforateur et/ou percuteur selon la revendication 4, **caractérisé en ce que** l'actionneur peut être actionné au moyen d'une commande et/ou présente des éléments actifs moteurs, électromécaniques, électromagnétiques (25) et/ou piézo-électriques.

8. Marteau perforateur et/ou percuteur selon l'une quelconque des revendications 1 à 7, **caractérisé en ce que** le logement de lubrifiant (11) est fixé de façon interchangeable sur ou dans un boîtier (1) du marteau perforateur et/ou percuteur.

9. Marteau perforateur et/ou percuteur selon la revendication 8, **caractérisé en ce que** le logement de lubrifiant (11) présente une ouverture pour le remplissage (20), par laquelle la réserve de lubrifiant (12) peut être remplie.

10. Marteau perforateur et/ou percuteur selon l'une quelconque des revendications 1 à 9, **caractérisé en ce que** dans l'ouverture de dosage (15) est prévu un dispositif de vanne (16, 17 ; 22 ; 24) avec lequel l'ouverture de dosage (15) ouvre et peut être fermé au moins dans une direction d'écoulement.

11. Marteau perforateur et/ou percuteur selon la revendication 10, **caractérisé en ce que** le dispositif de vanne (22) peut être activé au moyen d'un dispositif de commande de vanne.

12. Marteau perforateur et/ou percuteur selon la revendication 11, **caractérisé en ce que** l'ouverture de dosage (15) peut être fermée complètement par le dispositif de vanne (16, 17 ; 22) et **en ce que** la réserve de lubrifiant (12) peut être placée en permanence sous pression par le dispositif de production de pression (13, 14) au moins pendant le fonctionnement du marteau perforateur et/ou percuteur.

13. Marteau perforateur et/ou percuteur selon l'une quelconque des revendications 1 à 12,
**caractérisé en ce que**
- il est prévu un dispositif d'enregistrement de sollicitation, avec lequel on peut constater une sollicitation actuelle et/ou à plus long terme du marteau perforateur et/ou percuteur, et **en ce que**
- la constatation de la sollicitation s'effectue par l'enregistrement d'au moins un critère sélectionné parmi le groupe suivant : température à l'intérieur du marteau perforateur et/ou percuteur, température du lubrifiant, quantité de lubrifiant dans la zone du lieu de lubrification, quantité de lubrifiant dans le dépôt de lubrifiant, qualité du lubrifiant et/ou pureté du lubrifiant dans la zone du point de lubrification, temps d'exploitation, consommation de courant totale pendant la période d'exploitation, consommation de puissance totale pendant la durée d'exploitation, nombre total des rotations d'un entraînement du marteau perforateur et/ou percuteur en fonction de la durée d'exploitation, intensité de vibration, dégagement de bruit.

14. Marteau perforateur et/ou percuteur selon la revendication 13, **caractérisé en ce que** le temps d'exploitation est le total de toutes les périodes pendant lesquelles le marteau perforateur et/ou percuteur se trouve en service, à partir d'un moment défini, en particulier un moment de la dernière maintenance.

15. Marteau perforateur et/ou percuteur selon la revendication 13 ou 14, **caractérisé en ce que** le dispositif d'enregistrement de sollicitation présente au moins un dispositif capteur.

16. Marteau perforateur et/ou percuteur selon l'une quelconque des revendications 13 à 15, **caractérisé en ce qu'**un signal de sollicitation correspondant à la sollicitation peut être généré par le dispositif d'enregistrement de sollicitation.

17. Marteau perforateur et/ou percuteur au moins selon les revendications 11 et 16, **caractérisé en ce que** le signal de sollicitation peut être amené à un dispositif d'analyse, qui active en fonction du signal de sollicitation le dispositif de commande de vanne, afin d'ouvrir ou de fermer la vanne, et/ou interrompt l'alimentation du courant pour l'entraînement et/ou active l'actionneur (25) du dispositif de production de pression.

18. Marteau perforateur et/ou percuteur selon la revendication 16 ou 17, **caractérisé en ce que** le signal de sollicitation peut être amené à un dispositif d'affichage, pour la sortie d'un signal optique ou acoustique en fonction de la sollicitation correspondant au signal de sollicitation et/ou pour la sortie d'un signal pour l'information concernant un besoin de maintenance.

19. Marteau perforateur et/ou percuteur selon l'une quelconque des revendications 1 à 18, **caractérisé en ce que** le lieu de lubrification est en liaison de communication avec l'environnement sur une plage d'un logement d'outil, pour l'évacuation du lubrifiant consommé ou encrassé.
